(19) Europäisches Patentamt European Patent Office Office européen des brevets

(11) EP 2 466 278 B1

(12) **EUROPEAN PATENT SPECIFICATION**

(45) Date of publication and mention
of the grant of the patent:
**28.01.2015 Bulletin 2015/05**

(51) Int Cl.:
**G01F 23/00** *(2006.01)*    **B60K 15/00** *(2006.01)*

(21) Application number: **10195460.0**

(22) Date of filing: **16.12.2010**

(54) **Method for estimating the fuel level in a vehicle tank and corresponding fuel level estimation system**

Verfahren zum Abschätzen des Kraftstofffüllstands in einem Fahrzeugtank und entsprechende Anordnung

Méthode d'estimation du niveau de carburant dans le réservoir d'un véhicule et système d'estimation du niveau de carburant correspondant

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.06.2012 Bulletin 2012/25**

(73) Proprietor: **Fiat Powertrain Technologies S.p.A.**
**10135 Torino (IT)**

(72) Inventors:
• **Masiero, Claudio**
**13135, Torino (IT)**
• **Vennettilli, Nando**
**13135, Torino (IT)**
• **Garofalo, Fabio**
**13135, Torino (IT)**

(74) Representative: **Notaro, Giancarlo**
**Buzzi, Notaro & Antonielli d'Oulx**
**Via Maria Vittoria 18**
**10123 Torino (IT)**

(56) References cited:
**DE-A1-102005 016 007**    **FR-A1- 2 530 807**
**US-A1- 2002 194 910**    **US-A1- 2003 136 173**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

<u>Field of the invention</u>

The present invention refers to methods and systems for estimating the fuel level in a vehicle tank comprising measuring the fuel level through a fuel level sensor and acquiring information regarding the instantaneous fuel consumption available in the motor vehicle, comparing said fuel level measurement with said information regarding the instantaneous consumption to estimate the fuel level in the tank.

<u>General technical drawback and description of the prior art</u>

The exhaustion of fuel present in the tank of a vehicle provided with an internal combustion engine constitutes one of the main causes of vehicle stalling. An accurate estimation of the fuel level, and thus of the fuel distance (residual distance), reduces the probability of a vehicle stalling.

The estimation of the fuel level is often carried out by poorly accurate sensors.

In the case of liquid or partially liquid fuels, such as LPG fuels, for example, the washing present in the tank makes the measurement of the level poorly accurate in presence of strong longitudinal and lateral dynamic acceleration, as well as in the presence of road inclination.

The use of tanks of any shape, which adapt to the space available in the vehicle, and without anti-wash separators, increase the degree of the washing phenomenon and generally the sensitivity to forces which operate on the fuel in the tank during travel, for example, forces due to inclinations, ascent or descent, encountered during the travel.

A correct estimation of the fuel level is however important in that an ever-growing number of engine control processes relies on the correct estimation of the fuel level, for example misfire diagnosis or fuel transitions on bi-fuel applications.

Another important aspect lies in the fact that a fuel level sensor of the discrete type has a number of measurable values which varies in a range of values, depending on the set up, for example from 5 to 100. Generally, such values are not distributed linearly.

On the contrary, the indicator on the dashboard of the motor vehicle has a number of representable levels varying within a range of values, depending on the set up, for example from 5 to 100, but which are usually distributed linearly. Furthermore, use of discrete level sensors does not guarantee perfect match between the number of levels of the sensor, and the number of levels of the indicator, therefore considering the different distribution and the different number of levels, there may be considerable differences between the value indicated as the level measurement by the level sensor and the representation thereof through the indicator on the dashboard of the motor vehicle.

Furthermore, the measurement of the level sensor is not constant, considering the same fuel level present in the tank, due to the oscillations of the liquid and thus the fuel level is usually estimated by filtering - over time - the signal coming from the level sensor, to reduce the effect of the oscillations of the liquid. The logic for estimating the fuel level upon inserting the key or upon starting the engine differs with respect to that used during the travel of the vehicle. Actually, in these cases the signal coming from the level sensor is filtered in a much a lesser manner and it is compared with the value memorised when switching off to identify refuelling. This allows identifying and not considering a variation of the level measured by the sensor due to the washing.

The known methods instead are not capable of discriminating, once the engine is started, a variation of the level due to the strong longitudinal and lateral acceleration dynamics, and due to the presence of a road inclination. This causes, in some manoeuvres a variation of the signalled level, obviously not representing the actual conditions inside the tank.

Information regarding fuel consumption is usually used with the aim of estimating the fuel level in the tank in the most correct manner possible. Such information can be obtained in different ways, for example through flow meters which measure the amount of fuel drawn from the tank or by measuring the amount of air required by the engine and the air/fuel ratio indicated by the lambda probe in the exhaust pipe.

Acquiring and linearizing the signal of a continuous level sensor, for example of the float type, and comparing the value thereof with a value calculated as a function of the instantaneous consumption signalled by the lambda probe to provide a correct level signal is for example known from document US2010185360A1. The transduction characteristic of the signal is however corrected, while the variation levels due to oscillations are controlled upstream through filtering. Thus, such solution does not seem suitable to operate in systems, like those in which there are level sensors operating with few discrete levels which determine, even in absence of malfunctions or oscillations, high differences between the level indication of the tank deriving from the level sensor and the level indication deriving from the consumption sensor.

US patent publication number 2002/0194910 discloses a method for determining the instantaneous fluid level of a tank includes the steps of: designating a beginning fluid-level of the tank as an input value during the starting of the engine; ascertaining a first fluid-level value from a fluid level measured by a fluid-level measuring device, and ascertaining a second fluid-level value and a window around the second fluid-level value from the consumption of the engine and from the input value; comparing the first fluid-level value to the window around the second fluid-level value; determining whether the first or the second fluid-level value should be a new input value.

Object of the invention

The object of the present invention is that of overcoming the problems of the prior art described previously. In particular, the object of the present invention is that of providing the most reliable fuel level estimation, which is less subjected to the forces operating on the fuel during travel and allow operating with different types of level sensors.

Summary of the invention

The object of the present invention is attained by a method for estimating the fuel level in a vehicle tank according to claim 1.

The invention also refers to a corresponding system for estimating the fuel level in a vehicle tank.

Brief description of the drawings

Now, the invention shall be described with reference to the attached drawings, provided purely by way of non-limiting example, wherein:

- figure 1 represents a principle block diagram representing operations of the method according to the invention,
- figure 2 represents an illustrative diagram of the operation of the method according to the invention.

Detailed description of the invention

In brief, the method according to the invention provides for estimating the fuel level in the tank using information regarding the instantaneous consumption. In particular the use of information, available in modern engine control systems, i.e. available in the control unit, which derives from an estimation of the instantaneous fuel consumption based on the injection times, is provided for. Accuracy is very high and it depends on the accuracy of the fuel injectors. Fuel consumption actually represents the derivative - over time - of the fuel level actually present within the tank. The fuel level can thus be calculated starting from the information regarding the instantaneous consumption, on condition that the initialization value is known. The initialisation value can be obtained starting from the measurement of the level sensor with the vehicle standstill.

The method according to the invention thus provides for estimating the fuel level at a current instant as a function of values acquired at a previous instant, such comparison operation comprising comparing a level variation calculated between a level estimation at a previous instant and the level value measured at the current instant with a fuel consumption value calculated as a function of said consumption information between said current instant and said previous instant, said estimation operation comprising using - as a function of the result of said operation - the level value measured at the current instant or a function of the instantaneous consumption for a tolerance factor, as an estimation.

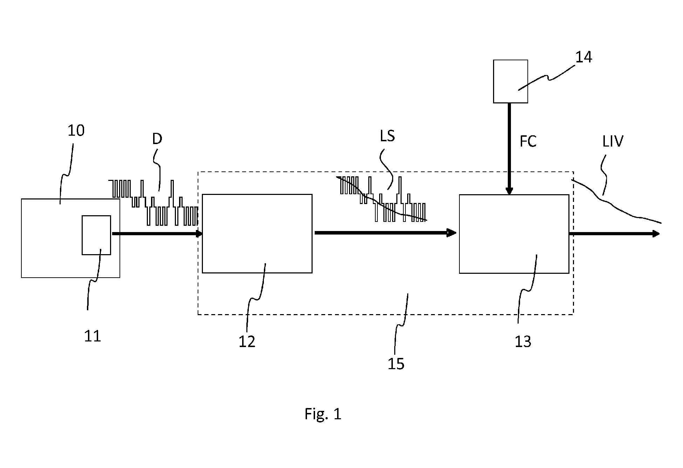

A principle block diagram of the system operating according to the method according to the invention is indicated in particular in figure 1.

A level sensor of a tank 10 is indicated with 11. Such level sensor is a discrete sensor, for example of the capacitive or conductive type, preferably a variable resistance conductive sensor, which, in this example - depending on the fuel level in the tank - is capable of supplying in output to a control unit 15, i.e. generally to one or more processors adapted to control the engine receiving from signals - from different sensors on the motor vehicle and controls from the user and hence controlling the engine actuators - a discrete measurement signal D, in the present example only with five levels, i.e. five voltage levels representing five amounts of fuel in the tank 10. Generally, the number of levels can be different, for example, varying between 5 and 100. Therefore, the discrete measurement signal D has a level-voltage characteristic substantially represented by a step ramp having five steps. Such voltage steps of the level-voltage characteristic are generally not uniform, therefore it is provided to intervene in the control unit 15 before filtering, represented by a block 12, linearizing such discrete measurement signal D, converting the discrete measurement signal D - a voltage signal for example expressed in mV - into a level expressed in kilograms of fuel.

The operation of filtering the discrete measurement signal D is a filtering operation over time aimed at reducing the effect of the oscillation of the liquid, which, as observable in figure 1, determines discrete leaps of the output of the level sensor 11. The time constant of the filter can be adjusted so as to be lower, i.e. provide a quicker filter, in case of detection of high fuel consumption. This allows reducing the estimation delay when the consumption is high. Therefore, at the exit of the filtering block 12 there is a calculated fuel level LS starting from the discrete measurement signal D of the level sensor 11, linearized and filtered, preferably expressed in kilograms.

A consumption sensor which supplies information regarding the instantaneous consumption FC to the control unit 15 is indicated with 14. Such instantaneous consumption FC is represented by instantaneous consumption values per time unit, in the example values expressed in kg/s. The instantaneous consumption sensor 14 in the example is a virtual sensor, the instantaneous consumption being calculated according to the injection times imparted by the control unit 15. Such instantaneous consumption FC is also preferably filtered.

Then a block representing a limitation operation of the speed of variation of the tank fuel level, as a function of the instantaneous consumption information, carried out in the control unit 15 which provides - in output - an estimated fuel level LIV, expressed for example in kg is indicated with 13.

Such operation 13 of limiting the speed of variation of the tank level comprises estimating such estimated fuel level LIV, at subsequent determined time instants, k-1, k, which identify a time range Δt= (k, k-1), using, for estimating the fuel level LIV(k) at the current instant k, the fuel level estimation LIV(k-1) at the previous instant k-1. Regarding this, calculating at each current instant k a variation of the fuel level RLS, as difference between the fuel level estimation LIV(k-1) at the previous instant k-1 and the calculated fuel level LS(k) at the current instant k is provided for, i.e. according to the following relation:

$$\text{RLS= - ( LS(k) - LIV(k-1) ),} \qquad\qquad (1)$$

Under ideal conditions of operation the variation of such fuel level variation RLS is a positive amount.

The fuel level variation RLS, divided by the time range Δt=(k,k-1) substantially corresponds to the inclination or variation speed of the calculated fuel level LS, expressed in kg/s.

Use of the instantaneous fuel consumption value FC, available in the control unit of the motor vehicle 15 for each instant k, which, under normal conditions of operation, is always an amount greater or equivalent to zero is also provided for in the block 13. Such value generally corresponds to an amount of fuel consumed within a unit of time, preferably expressed in kg/s.

The operation 13 of limiting the speed of variation of the tank level 13, provides for limiting the speed of variation of the estimated fuel level LIV over time, i.e. the inclination, of the curve representing it, operating as a function of such instantaneous fuel consumption FC, so as to avoid erroneous indications due to the dynamics of the vehicle or inclination of the road.

The speed of variation of the calculated fuel level LS, given by the variation value of the fuel level RLS on a determined time range (k, k-1), is particularly compared with the fuel consumption FC within the same time range.

If the two values RLS and FC coincide at least by a predetermined consumption tolerance TOL, then the calculated fuel level LS deemed reliable and the value of the fuel level estimated at the current instant k, LIV(k), is assumed equivalent to the fuel level value calculated at the current instant k, LS(k).

If, instead, the two values RLS and FC do not coincide, i.e. the variation of the fuel level RLS divided by the time range Δt= (k, k-1) does not coincide with the fuel consumption FC at least by the tolerance TOL, the calculated fuel level at the current instant k, LS(k), is considered unreliable and the fuel level value estimated at the current instant k, LIV(k) is calculated through linear extrapolation as a function of the instantaneous fuel consumption FC and of the tolerance TOL.

The error tolerance TOL is the tolerance allowed in order to consider the calculated fuel level LS reliable. Such error tolerance TOL can be preset in the control unit 15 or it can be adjustable to consider for example varied operating conditions. Such tolerance TOL can for example assume the value 0.25 to represent 25% of the tolerance consumption.

Thus, at each instant k, the formula for calculating the level, depends on the value assumed by the variable representing the variation of the calculated fuel level RLS in relation to the instantaneous fuel consumption FC, and it is expressed by the following relations:

$$
\begin{aligned}
&\text{LIV(k) = LIV(k-1) - RLS(k)} \\
&\text{if} \qquad \text{((1-TOL) * FC) *}\Delta t \text{ < RLS < ((1+TOL) * FC) *}\Delta t
\end{aligned}
$$

$$(2a)$$

$$LIV(k) = LIV(k-1) - ((1+ TOL) * FC)*\Delta t$$

$$if \quad RLS >= ((1+TOL) * FC)*\Delta t \qquad (2b)$$

$$LIV(k) = LIV(k-1) - ((1-TOL) * FC) *\Delta t$$

$$if RLS <= (((1-TOL) * FC)* \Delta t \qquad (2c).$$

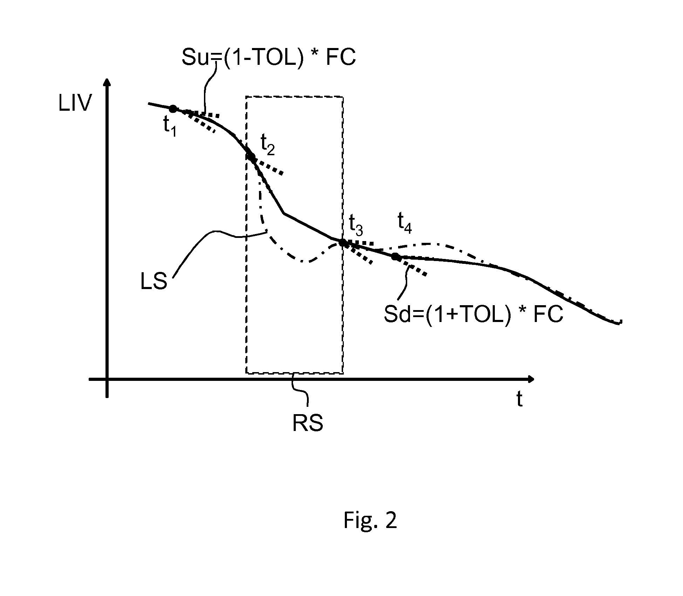

Figure 2 shows a diagram showing - as a function of time t - the trend of the calculated fuel level LS (dash and dot line) and the trend of the estimated fuel level LIV (solid line).

As observable from such diagram, the calculated fuel level LS initially, starting from a first time reference $t_1$, decreases as the inclination values of the corresponding curve increase. However, until a second time reference $t_2$ is reached, the variation value RLS calculated at each instant k is low, thus the corresponding variation speed is such to fall within an upper inclination limit $S_u$=(1-TOL)*FC and a lower limit $S_d$=(1+TOL)*FC, represented by dashed line sections, i.e. such to fall within the condition 2a). Thus, the calculated fuel level LS and the estimated fuel level LIV between the time reference $t_1$ and $t_2$ coincide.

It should be observed that in the present description the expressions upper inclination limit $S_u$ and corresponding upper tolerance (1-TOL) are used to refer to values that determine the lowest inclinations of the line segments that extrapolate the estimated fuel level LIV starting from the instant k or considered time reference. Such segments are arranged at the upper part with respect to the segments obtained by extrapolating according to the lower limit $S_d$, used as an angular coefficient of such line segments.

Regarding the time reference $t_2$, it is assumed that the motor vehicle - during the travel - enters into an inclining region RS, i.e. a region in which there is an inclination of the road, which determines an increase of the speed of variation, in particular reduction, of the calculated fuel level LS over time, i.e. at the second time reference $t_2$ the speed of variation RLS is greater than the speed defined by the lower inclination limit $S_d$. In such case according to the relation 2b, the estimated fuel level LIV(k) at the instant k is considered equivalent to a value extrapolated through a line as a function of time having the inclination or angular coefficient equivalent to the lower limit $S_d$. This lasts for all the iterations in which the speed of variation determined by the variation RLS remains greater than the value of the lower inclination limit, i.e., in the diagram of figure 2, up to a third time reference $t_3$, where the variation value RLS determines an inclination which once again meets the condition 2a) and thus the calculated fuel level LS and the estimated fuel level LIV coincide once again. At a fourth time $t_4$ instead there is a situation in which the variation RLS, for example due to the oscillations upon the exit from the inclined region RS, assumes a value such to fall within the condition 2c), i.e. the speed of variation associated thereto is lower than the upper limit $S_u$ (in the example the inclination associated to the variation RLS even changes the sign, indicating an increase of the fuel level) and thus the estimated fuel level LIV(k) at the instant k is considered equivalent to a value extrapolated through a line as a function of time having the inclination or angular coefficient equivalent to the upper limit $S_u$.

Thus, the advantages of the proposed solution are clear from the description above.

The method according to the invention advantageously increases the accuracy of the estimation of the fuel level, which improves considerably due to the use of the instantaneous consumption information, previously available in the engine control engine.

The method according to the invention, due to the comparison of the variation level indicated by the level sensor with a range of values derived from the instantaneous consumption allows operating with a poorly accurate level sensor, such as a discrete sensor. With respect to the known solutions, the proposed method avoids that between one step and the other of the ramp of the discrete sensor there be detected malfunctions due to plausibility diagnosis carried out on the two level and consumption measurements. Actually, the proposed method manages the absence of level information between two discrete levels due to the reconstruction of the level through consumption instant by instant and operating with two inclination limits to which - alternatingly - the level estimation is made to coincide in case - due to the steps - there is observed an considerable difference between the step ramp, though filtered, and consumption.

The method according to the invention due to the operations of limiting the speed of variation of the signal sent by the level sensor enables overcoming indication errors deriving from the fuel wash, by the influence of the road inclination and by strong dynamics generated by the vehicle in motion regarding the measurement of the level sensor

Obviously, the construction details and the embodiments may widely vary with respect to what has been described and without departing from the scope of protection of the present invention, as defined in the attached claims.

The method and system according to the invention, are particularly efficient when combined with discrete level sensors, but it can be used both with continuous and discrete level sensors.

Furthermore, it is clear that the evaluations carried out according to the speed of variation of the measured fuel level compared to the instantaneous consumption can be alternatively carried out even on corresponding amounts of fuel respectively measured in the tank and measured as consumed, without departing from the scope of protection of the present invention. As mentioned, the instantaneous fuel consumption substantially represents the derivative - over time - of the fuel level actually present inside the tank, which can be calculated starting from the information regarding the instantaneous consumption, according to an initialization value.

**Claims**

1. Method for estimating the fuel level in a vehicle tank comprising measuring the fuel level (D, LS) through a fuel level sensor (11) and acquiring (14) information regarding the instantaneous fuel consumption (FC) available in the motor vehicle,

   comparing (13) said fuel level measurement (D, LS) with said information regarding the instantaneous consumption (FC) to estimate the fuel level (LIV) in the tank,

   estimating the fuel level (LIV) at a series of subsequent instants (k-1, k), estimating such fuel level (LIV) at a current instant (k) as a function of values acquired at a previous instant (k-1),

   wherein

   said comparison operation (13) comprises limiting the speed of variation of said fuel level estimation (LIV),

   said limitation operation comprises calculating a level variation (RLS) calculated between a level estimation (LIV(k-1)) at a previous instant (k-1) and a measured level value (LS(k)) at the current instant (k),

   comparing a speed of said level variation (RLS) with one or more level variation speed limit values (Su, Sd) calculated starting from said instantaneous fuel consumption value (FC) between said current instant (k) and said previous instant (k-1),

   **characterized in that**

   said estimation operation comprises, as a function of the result of said comparison operation (13), using - as estimation (LIV(k)) - the measured level value (LS(k)) at the current instant (k) or obtaining said estimation (LIV(k) as a linear extrapolation according to one of said level variation speed limit values (Su, Sd), and **in that** the method further includes

   measuring the fuel level (D, LS) through a discrete fuel level sensor (11) which provides a plurality of discrete values, and calculating said one or more level variation speed limit values (Su, Sd) as a product of a predetermined tolerance value (1-TOL, 1+TOL) and said fuel consumption value (FC), and that said tolerance (TOL) can be preset or it can be adjustable.

2. Method according to claim 1, **characterised in that** said plurality of discrete values is comprised between 5 and 100.

3. Method according to one of claims 1 or 2, **characterized in that** it comprises filtering said fuel level measurement (D, LS).

4. Method according to any of the preceding claims, **characterized in that** it comprises linearizing said fuel level measurement (D, LS).

5. Method according to claim 1
   **characterised in**
   **that** it comprises two level variation speed limit values (Su, Sd), respectively an upper limit (Su) product of a higher tolerance value (1-TOL) and said fuel consumption value (FC), and a lower limit (Sd) product of a lower tolerance value (1+TOL) and said fuel consumption value (FC), said two limit values (Su, Sd) defining a tolerance range.

6. Method according to any of the preceding claims, **characterised in that** said comparison operation comprises for each comparison instant (k) the speed associated to said level variation (RLS) with the values of said tolerance range (Su, Sd)
   said limitation operation further comprising
   if said level variation speed (RLS) is comprised in said tolerance range (Su, Sd), calculating as level estimation (LIV(k) at the current instant (k), the level estimation value (LIV(k-1)) at the previous instant (k-1) decreased by said level variation (RLS),

if said level variation speed (RLS) is greater than the lower limit (Sd) of the tolerance range (Su, Sd), calculating the level estimation (LIV(k)) at the current instant (k) through linear extrapolation of the level estimation value (LIV(k-1)) using said lower limit (Sd) as an angular coefficient in said extrapolation,

if said level variation speed (RLS) is lower than the upper limit (Su) of the tolerance range (Su, Sd), calculating the level estimation (LIV(k)) at the current instant (k) through linear extrapolation of the level estimation value (LIV(k-1)) using said upper limit (Su) as an angular coefficient in said extrapolation.

7. Method according to any of the preceding claims, **characterised in that** it comprises acquiring (14) information regarding the instantaneous fuel consumption (FC) available in the motor vehicle estimating said instantaneous consumption as a function of injection times.

8. System for estimating the fuel level in a tank, in particular for motor vehicles comprising a fuel level sensor (11) for measuring the fuel level (D, LS), means (14) for detecting an instantaneous fuel consumption (F) and means (15) configured for receiving and processing said fuel level measurement (D, LS) and said instantaneous fuel consumption (F), **characterised in that** said processor means (15) are configured to execute the method according to one or more of claims 1 to 7.

9. System according to claim 8, **characterised in that** said sensor is a discrete sensor.


## Patentansprüche

1. Verfahren zum Abschätzen des Kraftstofffüllstands in einem Fahrzeugtank, umfassend das Messen des Kraftstofffüllstands (D, LS) über einen Kraftstofffüllstandssensor (11) und Gewinnen (14) von Informationen zum momentanen Kraftstoffverbrauch (FC), die im Kraftfahrzeug zur Verfügung stehen,

Vergleichen (13) des Kraftstofffüllstandsmesswerts (D, LS) mit den Informationen zum momentanen Verbrauch (FC) zum Abschätzen des Kraftstofffüllstands (LIV) in dem Tank,

Abschätzen des Kraftstofffüllstands (LIV) zu einer Reihe von späteren Zeitpunkten (k-1, k), Abschätzen dieses Kraftstofffüllstands (LIV) zu einem aktuellen Zeitpunkt (k) in Abhängigkeit von Werten, die zu einem früheren Zeitpunkt (k-1) erfasst wurden,

wobei

der Vergleichsvorgang (13) das Begrenzen der Geschwindigkeit der Veränderung der Kraftstofffüllstandschätzung (LIV) umfasst,

wobei der Begrenzungsvorgang Folgendes umfasst:

Berechnen einer Füllstandsänderung (RLS), die zwischen einer Füllstandsschätzung (LIV(k-1)) zu einem früheren Zeitpunkt (k-1) und einem gemessenen Füllstandswert (LS(k)) zu dem aktuellen Zeitpunkt (k) berechnet wird,

Vergleichen einer Geschwindigkeit der Füllstandsänderung (RLS) mit einem oder mehreren Füllstandsänderungsgeschwindigkeits-Grenzwerten (Su, Sd), die beginnend ab dem momentanen Kraftstoffverbrauchswert (FC) zwischen dem aktuellen Zeitpunkt (k) und dem früheren Zeitpunkt (k-1) berechnet werden,

**dadurch gekennzeichnet, dass**

der Abschätzvorgang in Abhängigkeit von dem Ergebnis des Vergleichsvorgangs (13) das Verwenden - als Schätzung (LIV(k)) - des gemessenen Füllstandswerts (LS(k)) zum aktuellen Zeitpunkt (k) oder das Erhalten der Schätzung (LIV(k) als lineare Extrapolation entsprechend einem der Füllstandsänderungsgeschwindigkeits-Grenzwerte (Su, Sd) umfasst, und dadurch, dass das Verfahren ferner Folgendes umfasst:

Messen des Kraftstofffüllstands (D, LS) über einen diskreten Kraftstofffüllstandssensor (11), der eine Vielzahl von diskreten Werten liefert, und Berechnen des einen oder der mehreren Füllstandsänderungsgeschwindigkeits-Grenzwerte (Su, Sd) als Produkt aus einem vorher festgelegten Toleranzwert (1-TOL, 1+TOL) und dem Kraftstoffverbrauchswert (FC), und dass die Toleranz (TOL) voreingestellt sein kann oder einstellbar sein kann.

2. Verfahren nach Anspruch 1, **dadurch gekennzeichnet, dass** die Vielzahl von diskreten Werten zwischen 5 und 100 liegt.

3. Verfahren nach einem der Ansprüche 1 oder 2, **dadurch gekennzeichnet, dass** es das Filtern des Kraftstofffüllstandsmesswerts (D, LS) umfasst.

4. Verfahren nach einem der vorhergehenden Ansprüche, **dadurch gekennzeichnet, dass** es das Linearisieren des Kraftstofffüllstandsmesswerts (D, LS) umfasst.

5. Verfahren nach Anspruch 1, **dadurch gekennzeichnet, dass** es zwei Füllstandsänderungsgeschwindigkeits-Grenzwerte (Su, Sd) umfasst, eine obere Grenze (Su) als Produkt aus einem höheren Toleranzwert (1-TOL) und dem Kraftstoffverbrauchswert (FC) beziehungsweise eine untere Grenze (Sd) als Produkt aus einem niedrigeren Toleranzwert (1+TOL) und dem Kraftstoffverbrauchswert (FC), wobei die beiden Grenzwerte (Su, Sd) einen Toleranzbereich definieren.

6. Verfahren nach einem der vorhergehenden Ansprüche, **dadurch gekennzeichnet, dass** der Vergleichsvorgang für jeden Vergleichszeitpunkt (k) die Geschwindigkeit, die der Füllstandsänderung (RLS) zugehörig ist, mit den Werten des Toleranzbereichs (Su, Sd) umfasst,
wobei der Begrenzungsvorgang ferner Folgendes umfasst:

> wenn die Füllstandsänderungsgeschwindigkeit (RLS) innerhalb des Toleranzbereichs (Su, Sd) liegt, Berechnen als Füllstandsschätzung (LIV(k) zu dem aktuellen Zeitpunkt (k) des Füllstandsschätzwerts (LIV(k-1)) zu dem vorherigen Zeitpunkt (k-1), vermindert um die Füllstandsänderung (RLS),
> wenn die Füllstandsänderungsgeschwindigkeit (RLS) höher als die untere Grenze (Sd) des Toleranzbereichs (Su, Sd) ist, Berechnen der Füllstandsschätzung (LIV(k) zu dem aktuellen Zeitpunkt (k) durch lineare Extrapolation des Füllstandsschätzwerts (LIV(k-1)) unter Verwendung der unteren Grenze (Sd) als Steigung in der Extrapolation,
> wenn die Füllstandsänderungsgeschwindigkeit (RLS) niedriger als die obere Grenze (Su) des Toleranzbereichs (Su, Sd) ist, Berechnen der Füllstandsschätzung (LIV(k) zu dem aktuellen Zeitpunkt (k) durch lineare Extrapolation des Füllstandsschätzwerts (LIV(k-1)) unter Verwendung der oberen Grenze (Su) als Steigung in der Extrapolation.

7. Verfahren nach einem der vorhergehenden Ansprüche, **dadurch gekennzeichnet, dass** es das Gewinnen (14) von Informationen zum momentanen Kraftstoffverbrauch (FC), die im Kraftfahrzeug zur Verfügung stehen, durch Abschätzen des momentanen Verbrauchs in Abhängigkeit von Einspritzzeiten umfasst.

8. System zum Abschätzen des Kraftstofffüllstands in einem Tank, insbesondere für Kraftfahrzeuge, das einen Kraftstofffüllstandssensor (11) zum Messen des Kraftstofffüllstands (D, LS), Mittel (14) zum Erkennen eines momentanen Kraftstoffverbrauchs (F) und Mittel (15) umfasst, die zum Empfangen und Verarbeiten des Kraftstofffüllstandsmesswerts (D, LS) und des momentanen Kraftstoffverbrauchs (F) eingerichtet sind, **dadurch gekennzeichnet, dass** die Prozessormittel (15) so ausgelegt sind, dass sie das Verfahren nach einem oder mehreren der Ansprüche 1 bis 7 ausführen.

9. System nach Anspruch 8, **dadurch gekennzeichnet, dass** es sich bei dem Sensor um einen diskreten Sensor handelt.

**Revendications**

1. Procédé d'estimation du niveau de carburant dans un réservoir de véhicule comprenant la mesure du niveau de carburant (D, LS) par l'intermédiaire d'un capteur de niveau de carburant (11) et l'acquisition (14) des informations concernant la consommation de carburant instantanée (FC) disponible dans le véhicule automobile,
la comparaison (13) de ladite mesure de niveau de carburant (D, LS) avec lesdites informations concernant la consommation instantanée (FC) pour estimer le niveau de carburant (LIV) dans le réservoir,
l'estimation du niveau de carburant (LIV) à une série d'instants ultérieurs (k-1, k), l'estimation d'un tel niveau de carburant (LIV) à un instant actuel (k) en fonction de valeurs acquises à un instant précédent (k-1),
dans lequel
ladite opération de comparaison (13) comprend la limitation de la vitesse de variation de ladite estimation de niveau de carburant (LIV),
ladite opération de limitation comprend
le calcul d'une variation de niveau (RLS) calculée entre une estimation de niveau (LIV (k-1)) à un instant précédent (k-1) et une valeur de niveau mesurée (LS(k)) à l'instant actuel (k),
la comparaison d'une vitesse de ladite variation de niveau (RLS) avec une ou plusieurs valeur(s) limite(s) de vitesse de variation de niveau (Su, Sd) calculée(s) à partir de ladite valeur de consommation de carburant instantanée (FC) entre ledit instant actuel (k) et ledit instant précédent (k-1),

**caractérisé en ce que**

ladite opération d'estimation comprend, en fonction du résultat de ladite opération de comparaison (13), l'utilisation - en tant qu'estimation (LIV (k)) - de la valeur de niveau mesurée (LS (k)) à l'instant actuel (k) ou l'obtention de ladite estimation (LIV (k)) en tant qu'extrapolation linéaire selon l'une desdites valeurs limites de vitesse de variation de niveau (Su, Sd), et **en ce que** le procédé comporte en outre

la mesure du niveau de carburant (D, LS) par l'intermédiaire d'un capteur de niveau de carburant discret (11) qui fournit une pluralité de valeurs discrètes, et le calcul de ladite une ou plusieurs valeur(s) limite(s) de vitesse de variation de niveau (Su, Sd) en tant que produit d'une valeur de tolérance prédéterminée, (1-TOL, 1+TOL) et de ladite valeur de consommation de carburant (FC), et **en ce que** ladite tolérance (TOL) peut être présélectionnée ou elle peut être réglable.

2. Procédé selon la revendication 1, **caractérisé en ce que** ladite pluralité de valeurs discrètes est comprise entre 5 et 100.

3. Procédé selon l'une des revendications 1 ou 2, **caractérisé en ce qu'**il comprend le filtrage de ladite mesure de niveau de carburant (D, LS).

4. Procédé selon l'une des revendications précédentes, **caractérisé en ce qu'**il comprend la linéarisation de ladite mesure de niveau de carburant (D, LS).

5. Procédé selon la revendication 1, **caractérisé en ce qu'**il comprend deux valeurs limites de vitesse de variation de niveau (Su, Sd), respectivement une limite supérieure (Su) produit d'une valeur de tolérance supérieure (1-TOL) et de ladite valeur de consommation de carburant (FC), et une limite inférieure (Sd) produit d'une valeur de tolérance inférieure (1+TOL) et de ladite valeur de consommation de carburant (FC), lesdites deux valeurs limites (Su, Sd) définissant une plage de tolérance.

6. Procédé selon l'une des revendications précédentes, **caractérisé en ce que** ladite opération de comparaison comprend, pour chaque instant de comparaison (k), la vitesse associée à ladite variation de niveau (RLS) avec les valeurs de ladite plage de tolérance (Su, Sd)

ladite opération de limitation comprenant en outre

si ladite vitesse de variation de niveau (RLS) est comprise dans ladite plage de tolérance (Su, Sd), le calcul en tant qu'estimation de niveau (LIV (k)) à l'instant actuel (k), de la valeur d'estimation de niveau (LIV (k-1)) à l'instant précédent (k-1) diminuée de ladite variation de niveau (RLS),

si ladite vitesse de variation de niveau (RLS) est supérieure à la limite inférieure (Sd) de la plage de tolérance (Su, Sd), le calcul de l'estimation de niveau (LIV(k)) à l'instant actuel (k) par extrapolation linéaire de la valeur d'estimation de niveau (LIV (k-1)) en utilisant ladite limite inférieure (Sd) en tant que coefficient angulaire dans ladite extrapolation,

si ladite vitesse de variation de niveau (RLS) est inférieure à la limite supérieure (Su) de la plage de tolérance (Su, Sd), le calcul de l'estimation de niveau (LIV (k)) à l'instant actuel (k) par extrapolation linéaire de la valeur d'estimation de niveau (LIV (k-1)) en utilisant ladite limite supérieure (Su) en tant que coefficient angulaire dans ladite extrapolation.

7. Procédé selon l'une des revendications précédentes, **caractérisé en ce qu'**il comprend l'acquisition (14) des informations concernant la consommation de carburant instantanée (FC) disponible dans le véhicule automobile estimant ladite consommation instantanée en fonction du temps d'injection.

8. Système d'estimation du niveau de carburant dans un réservoir, en particulier pour véhicules automobiles, comprenant un capteur de niveau de carburant (11) pour mesurer le niveau de carburant (D, LS), des moyens (14) pour détecter une consommation de carburant instantanée (F) et des moyens (15) configurés pour recevoir et traiter ladite mesure de niveau de carburant (D, LS) et ladite consommation de carburant instantanée (F), **caractérisé en ce que** lesdits moyens de traitement (15) sont configurés pour exécuter le procédé selon une ou plusieurs des revendications 1 à 7.

9. Système selon la revendication 8, **caractérisé en ce que** ledit capteur est un capteur discret.

Fig. 1

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010185360 A1

- US 20020194910 A